# EUROPÄISCHE PATENTSCHRIFT

(11) **EP 3 091 254 B1**
(45) Veröffentlichungstag und Bekanntmachung des Hinweises auf die Patenterteilung: **01.04.2020**
(21) Anmeldenummer: 16168086.3
(22) Anmeldetag: 03.05.2016
(51) Int. Cl.: F16H 37/04, F16H 3/00

(54) **GETRIEBEANORDNUNG**
GEARBOX ASSEMBLY
SYSTÈME D'ENGRENAGE

(30) Priorität: 04.05.2015 DE 102015208166
(43) Veröffentlichungstag der Anmeldung: 09.11.2016
(73) Patentinhaber: Deere & Company, Moline, IL 61265 (US)
(72) Erfinder: Raisch, Stefan, 71665 Vaihingen/Enz (DE); Müller, David, 76297 Stutensee (DE)
(74) Vertreter: Dehnhardt, Florian Christopher

(56) Entgegenhaltungen:
- EP-A1- 1 624 232
- DE-A1-102010 029 597
- JP-A- 2008 180 255

## Beschreibung

Die Erfindung betrifft eine Getriebeanordnung, insbesondere für ein landwirtschaftliches Arbeitsfahrzeug, mit einem Parallelschaltgetriebe mit mehreren Gangstufen und einer Eingangswelle, von der ausgehend eine Antriebsleistung jeweils über ein erstes und ein zweites Schaltelement auf jeweilige Vorgelegewellen verteilt werden kann, und einer Ausgangswelle, wobei von jeder der Vorgelegewellen die Antriebsleistung bedarfsweise auf die Ausgangswelle übertragbar ist, und einem Gruppenschaltgetriebe mit mehreren Schaltgruppen.

Bei landwirtschaftlichen Arbeitsfahrzeugen, beispielsweise Traktoren, haben Getriebeanordnungen aufgrund des sehr breiten Einsatzbereichs des Fahrzeugs sehr unterschiedliche Fahrbereiche abzudecken. Dies erfordert eine entsprechend große Spreizung zwischen der langsamsten und der schnellsten Übersetzungsstufe der Getriebeanordnung. Hier ist "langsam" und "schnell" auf die resultierende Fahrgeschwindigkeit des Fahrzeugs bezogen. Getriebeanordnungen für landwirtschaftliche Arbeitsmaschinen weisen zudem regelmäßig kleine geometrische Stufensprünge zwischen den einzelnen Übersetzungsstufen auf, so dass in Kombination mit der großen Spreizung eine hohe Anzahl an Gängen die Folge ist. Diese hohe Anzahl an Gangstufen lässt sich bei Getriebeanordnungen für landwirtschaftliche Arbeitsmaschinen durch eine Gruppenbauweise mit einem vertretbaren Aufwand realisieren.

JP2008-180255A offenbart eine Getriebeanordnung nach dem Oberbegriff des Anspruchs 1.

Ein möglicher Aufbau einer Getriebeanordnung für ein landwirtschaftliches Arbeitsfahrzeug besteht aus einem Hauptschaltgetriebe, einem nachgeschalteten Gruppenschaltgetriebe und einem Wendegetriebe, auch Reversiereinheit genannt. Üblicherweise wird ein enggestuftes Hauptschaltgetriebe eingesetzt, dessen Gangstufen lastschaltbar ausgeführt sind, und ein Gruppenschaltgetriebe nachgeschaltet, dessen Schaltgruppen allerdings nicht lastschaltbar sind. Bei einer derartigen Getriebeanordnung kann ein Gangwechsel des Hauptschaltgetriebe innerhalb einer Schaltgruppe des Gruppenschaltgetriebes lastgeschaltet, das heißt ohne Zugkraftunterbrechung, durchgeführt werden. Ist es allerdings erforderlich, einen Wechsel der Schaltgruppe des Gruppenschaltgetriebes vorzugnehmen, ist dies nicht ohne eine Zugkraftunterbrechung möglich.

Eine derartige Getriebeanordnung zeigt die DE 10 2010 029597 A1, bei der das Hauptschaltgetriebe als sogenanntes Parallelschaltgetriebe ausgeführt ist.

In der Praxis ist es nun so, dass beispielsweise bei einem Gruppenschaltgetriebe mit drei Schaltgruppen A, B und C eine Lastschaltbarkeit zwischen den Schaltgruppen B und C den Fahrkomfort in einem deutlichen und ausreichenden Maße steigern würde und gleichzeitig die Anforderung an ein zugkraftunterbrechungsfreies Schalten in diesem Fahrgeschwindigkeitsbereich erfüllen würde. Hierbei stellt die Schaltgruppe A eine langsame Übersetzungsstufe und die Schaltgruppe C eine schnelle Übersetzungsstufe bereit. Gleichzeitig wäre es wünschenswert eine Lastschaltbarkeit, zumindest in dem soeben beschriebenen Umfang, kostengünstig und ohne substantielle Veränderungen bestehender Getriebestrukturen bereitstellen zu können.

Die Aufgabe der vorliegenden Erfindung besteht nun darin eine Getriebeanordnung bereitzustellen, die den oben genannten Anforderungen teilweise oder vollständig gerecht wird.

Die Aufgabe wird gelöst durch eine Getriebeanordnung, insbesondere für ein landwirtschaftliches Arbeitsfahrzeug, umfassend ein Parallelschaltgetriebe mit mehreren Gangstufen und einer Eingangswelle, von der ausgehend eine Antriebsleistung jeweils über ein erstes und ein zweites Schaltelement auf jeweilige Vorgelegewellen verteilt werden kann, und einer Ausgangswelle, wobei von jeder der Vorgelegewellen die Antriebsleistung bedarfsweise auf die Ausgangswelle übertragbar ist, ein Gruppenschaltgetriebe mit mehreren Schaltgruppen und einer Abtriebswelle, wobei die Schaltgruppen mit der Ausgangswelle des Parallelschaltgetriebes antriebsverbindbar sind, um die Antriebsleistung auf die Abtriebswelle des Gruppenschaltgetriebes zu leiten und eine Koppelübersetzungsstufe, mit der die Antriebsleistung unter Umgehung der Schaltgruppen des Gruppenschaltgetriebes von einer der Vorgelegewellen auf die Abtriebswelle des Gruppenschaltgetriebes leitbar ist.

Durch die erfindungsgemäße Ausgestaltung wird eine Lastschaltbarkeit von Schaltgruppen des Gruppenschaltgetriebes dadurch erreicht, dass die Koppelübersetzungsstufe einen Brückengang bereitstellt, mit dem die Schaltgruppen des Gruppenschaltgetriebes umgangen werden können, um währenddessen die als nächstes einzulegende Schaltgruppe vorzuselektieren. Zeitgleich wird in dem Parallelschaltgetriebe die als nächstes einzulegende Gangstufe ebenfalls vorselektiert. Ausgehend hiervon kann dann eine Lastschaltung in die nächste Übersetzungsstufe erfolgen, die sich aus der Kombination der als nächstes einzulegende Schaltgruppe und Gangstufe ergibt. Dieser Brückengang kann auch als Ersatzübersetzung bezeichnet werden, da er genau diese Übersetzungsstufe bereitstellt, von der ausgehend die Lastschaltung in eine andere Schaltgruppe durchgeführt wird.

Bevorzugt ist die Koppelübersetzungsstufe als Stirnradstufe ausgebildet. Eine Stirnradstufe ist konstruktiv einfach darstellbar und baut axial kurz. Insbesondere ist vorgesehen, dass die Stirnradstufe als Doppelstirnradstufe mit einem auf einer Hauptwelle des Gruppenschaltgetriebes drehbar gehaltenen Stirnrad ausgebildet ist.

Bevorzugt ist eine Schaltstelle mit einer ersten und einer zweiten Schaltstellung vorgesehen, wobei in der ersten Schaltstellung eine der Schaltgruppen mit der Abtriebswelle und in der zweiten Schaltstellung die Koppelübersetzungsstufe mit der Abtriebswelle antriebsverbunden. Hierfür kann eine bereits in dem Gruppenschaltgetriebe vorhandene Schaltstelle benutzt werden.

Bevorzugt ist die Koppelübersetzungsstufe mit der die geraden Gangstufen des Parallelschaltgetriebes tragenden Vorgelegewelle antriebsverbunden. Hierdurch ist gewährleistet, dass die andere der beiden Vorgelegewelle, auf der die ungeraden Gangstufen gehalten sind, keine Antriebsleistung überträgt während sich die Koppelübersetzungsstufe im Kraftfluss befindet und eine Lastschaltung zwischen zwei Schaltgruppen vorzunehmen ist.

Bevorzugt umfasst das Gruppenschaltgetriebe eine ersten, eine zweite und eine dritte Schaltgruppe, wobei eine Übersetzung der Koppelübersetzungsstufe derjenigen Übersetzung entspricht, die durch eine Kombination der am längsten übersetzten Gangstufe des Parallelschaltgetriebes und der zweiten Schaltgruppe des Gruppenschaltgetriebes schaltbar ist. Hierdurch kann die Koppelübersetzungsstufe als Ersatz für diese Kombination aus längster Gangstufe und zweiter Schaltgruppe dienen, so dass über die nicht im Kraftflusspfad befindliche Vorgelegewelle die nächste Schaltgruppe beziehungsweise die nächstlänger übersetzte Schaltgruppe für eine Lastschaltung vorselektiert werden kann.

Bevorzugt ist die Koppelübersetzungsstufe in dem Gruppenschaltgetriebe angeordnet ist. Dies ist konstruktiv einfach darstellbar und hierdurch kann eine bestehende Schaltstelle des Gruppenschaltgetriebes für die Schaltung der Koppelübersetzungsstufe genutzt werden.

Die erfindungsgemäße Getriebeanordnung wird anhand der nachfolgenden Figuren beschrieben. Hierin zeigen
- Figur 1: ein landwirtschaftliches Arbeitsfahrzeug mit einem Antriebsstrang, der eine erfindungsgemäßen Getriebeanordnung umfasst;
- Figur 2: ein Blockschaltbild einer erfindungsgemäßen Getriebeanordnung in einer möglichen Ausführungsform;
- Figur 3: ein Strichdiagramm der Getriebeanordnung in einer möglichen Ausführungsform;
- Figur 4: eine Schaltmatrix der Getriebeanordnung in einer möglichen Ausführungsform;
- Figur 5a: ein Strichdiagramm der Getriebeanordnung in einer möglichen Ausführungsform mit Kraftflüssen vor und nach einer Lastschaltung und
- Figur 5b: ein Strichdiagramm der Getriebeanordnung in einer möglichen Ausführungsform mit Kraftflüssen vor und nach einer Lastschaltung.

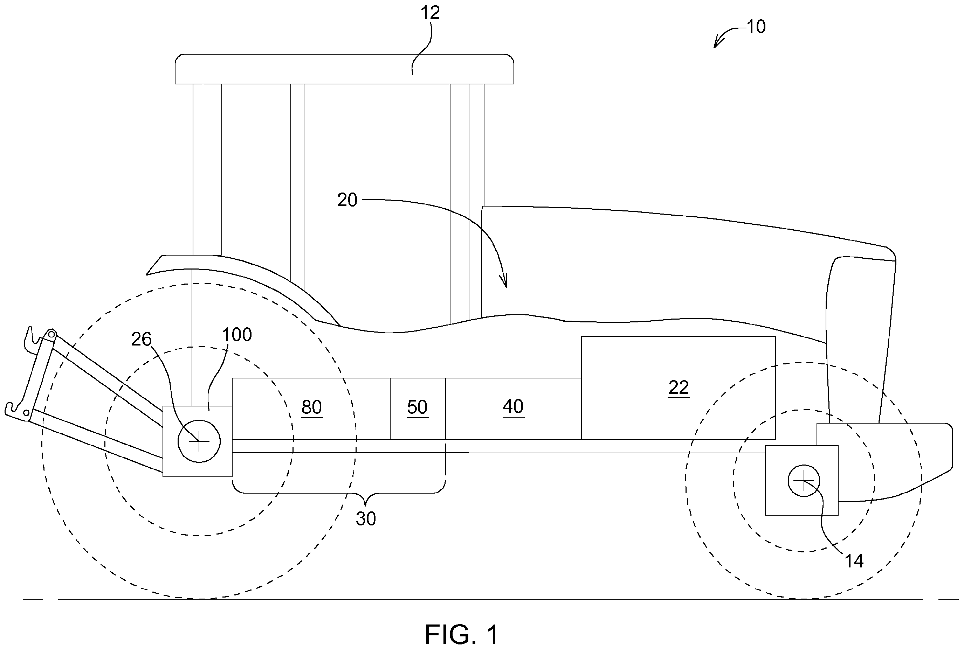

Die Figur 1 zeigt ein landwirtschaftliches Arbeitsfahrzeug 10 in Gestalt eines Traktors mit einem Antriebsstrang 20 in einer möglichen Ausgestaltung. Das Arbeitsfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. In der vorliegend beschriebenen Getriebestruktur kann im Kraft- und Momentenfluss ausgehend von dem Antriebsmotor 22 ein Wendegetriebe 40, ein Hauptschaltgetriebe 50, ein Gruppenschaltgetriebe 80 und ein Differentialgetriebe 100 vorgesehen sein. Bei der Einheit bestehend aus dem Hauptschaltgetriebe 50 und dem Gruppenschaltgetriebe 80 handelt es sich um die erfindungsgemäße Getriebeanordnung, die mit dem Bezugszeichen 30 versehen ist. Das Hauptschaltgetriebe 50 ist als Parallelschaltgetriebe ausgeführt. Auf eine Darstellung des Abtriebs des bedarfsweise zuschaltbaren Vorderradantriebs aus dem Gruppenschaltgetriebe 80 wurde verzichtet.

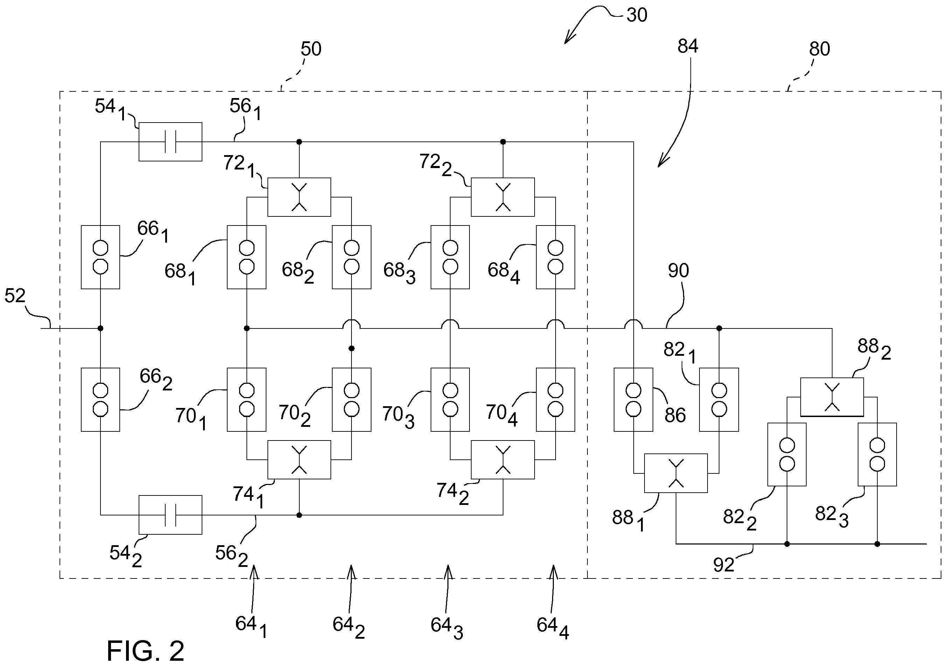

Die Figur 2 zeigt ein Blockschaltbild einer erfindungsgemäßen Getriebeanordnung 30 in einer möglichen Ausführungsform. Die Getriebeanordnung 30 umfasst ein Hauptschaltgetriebe in Form eines Parallelschaltgetriebes 50 und ein Gruppenschaltgetriebe 80 mit vorliegend drei Schaltgruppen 82₁, 82₂, 82₃. Sowohl das Parallelschaltgetriebe 50 als auch das Gruppenschaltgetriebe 80 können, wie vorliegend dargestellt, in Vorgelegebauweise ausgeführt sein.

Das Parallelschaltgetriebe 50 weist eine durch den in Figur 1 dargestellten Antriebsmotor 22 angetriebene Eingangswelle 52 auf, von der ausgehend die Antriebsleistung über zwei Stirnradstufen 66₁, 66₂ an jeweilige Schaltelemente 54₁, 54₂ verteilt werden kann, wobei die Schaltelemente 54₁, 54₂ ihrerseits Vorgelegewellen 56₁, 56₂ in eine Antriebsverbindung mit den Stirnradstufen 66₁, 66₂ bringen können. Ausgehend von den Vorgelegewellen 56₁, 56₂ kann die Antriebsleistung über jeweilige Stirnradstufen 68, 70 auf einen Abtrieb des Parallelschaltgetriebe 50 übertragen werden, wobei der Abtrieb durch die Ausgangswelle 58 gebildet wird. In einer möglichen konkreten Ausgestaltung sind der Vorgelegewelle 56₁ die Stirnradstufen 68₁ bis 68₄ und der Vorgelegewelle 56₂ die Stirnradstufen 70₁ bis 70₄ zugeordnet. Hierbei können jeweilige Losräder der Stirnradstufen 68₁ bis 70₄ auf den Vorgelegewellen 56₁, 56₂ gehalten sein und mittels Doppelschaltstellen 72₁, 72₂, 74₁, 74₂ in eine Antriebsverbindung mit der jeweiligen Vorgelegewelle 56₁, 56₂ gebracht werden. Auf den Vorgelegewellen 56₁, 56₂ sich gegenüberliegende Stirnradstufen sind in Schaltebenen 64₁ bis 64₄ angeordnet. Somit sind die Stirnradstufen 68₁, 70₁ in der Schaltebene 64₁, die Stirnradstufen 68₂, 70₂ in der Schaltebene 64₂, die Stirnradstufen 68₃, 70₃ in der Schaltebene 64₃ und die Stirnradstufen 68₄, 70₄ in der Schaltebene 64₄ angeordnet.

Das Gruppenschaltgetriebe 80 weist eine durch die Ausgangswelle 58 des Parallelschaltgetriebes 50 angetriebene Hauptwelle 90 auf, von der ausgehend die Antriebsleistung über drei als Stirnradstufen ausgebildete Schaltgruppen 82₁, 82₂, 82₃ auf eine Abtriebswelle 92 übertragen werden kann. Hierbei können jeweilige Losräder der Schaltgruppen 82₂, 82₃ auf der Hauptwelle 90 gehalten sein und mittels der Doppelschaltstelle 88₂ in eine Antriebsverbindung mit der Hauptwelle 90 gebracht werden. Das Losrad der Schaltgruppe 82₁ ist auf der Abtriebswelle 92 gehalten und kann mittels der Doppelschaltstelle 88₁ in eine Antriebsverbindung mit der Abtriebswelle 92 gebracht werden. Infolge der Anordnung des Losrades der Schaltgruppe 82₁ ist auf der Abtriebswelle 92 ist auch die Schaltstelle 88₁ auf der Abtriebswelle 92 angeordnet, wohingegen die Schaltstelle 88₂ auf der Hauptwelle 90 angeordnet ist.

Die in der Figur 2 gezeigte Ausführungsform der Getriebeanordnung 30 umfasst ferner eine Koppelübersetzungsstufe 84. Die Koppelübersetzungsstufe 84 ist vorliegend in dem Gruppenschaltgetriebe 80 angeordnet. Alternativ kann sie aber auch in dem Parallelschaltgetriebe 50 angeordnet sein oder als eigenständige bauliche Einheit ausgebildet sein. Die Koppelübersetzungsstufe 84 ist in der Lage eine Antriebsverbindung zwischen einer der Vorgelegewellen 56₁, 56₂ und der Abtriebswelle 92 des Gruppenschaltgetriebes 80 herzustellen. Ist diese Antriebsverbindung hergestellt, befinden sich weder die andere Vorgelegewelle 56₂, 56₁ noch die Hauptwelle 90 in dem Kraftflusspfad. Die Koppelübersetzungsstufe 84 umfasst eine Stirnradstufe 86 und ist mit einem Losrad 96 der Stirnradstufe 86 der Abtriebswelle 92 zugeordnet, wobei mittels der Doppelschaltstelle 88₁ in einer der Schaltstellungen das Losrad 96 mit der Abtriebswelle 92 antriebsmäßig verbunden werden kann.

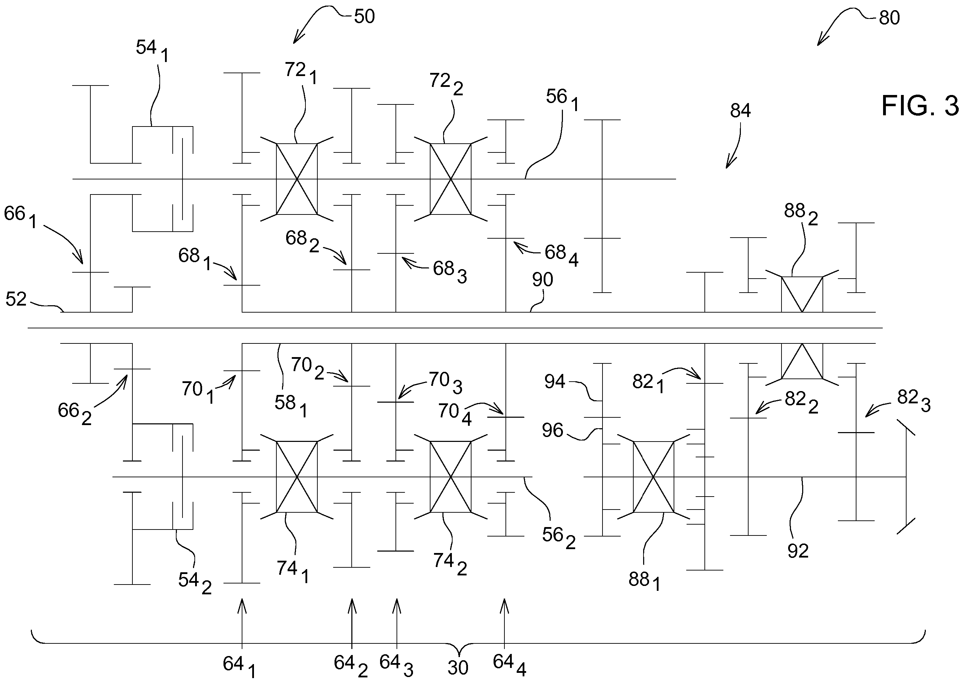

Die Figur 3 zeigt ein Strichdiagramm der Getriebeanordnung 30 in der zuvor beschriebenen Ausführungsform. Auf der Vorgelegewelle 56₁ des Parallelschaltgetriebes 50 sind die gerade Gangstufen 2, 4, 6 und 8 gehalten, wobei in der ersten Schaltebene 64₁ die Gangstufe 8 und in der vierten Schaltebene 64₄ die Gangstufe 2 angeordnet ist. Auf der Vorgelegewelle 56₂ sind die ungerade Gangstufen 1, 3, 5 und 7 gehalten, wobei in der ersten Schaltebene 64₁ die Gangstufe 7 und in der vierten Schaltebene 64₄ die Gangstufe 1 angeordnet ist. Die Anordnung der Schaltgruppen 82₁, 82₂, 82₃ ist derart getroffen, dass es sich bei der Schaltgruppe 82₁ um diejenige mit der kürzesten Übersetzung und bei der Schaltgruppe 82₃ um diejenige mit der längsten Übersetzung handelt. Die Schaltgruppen 82₁, 82₂, 82₃ können in dieser Reihenfolge auch mit A, B und C bezeichnet werden. Die Stirnradstufe 86 ist als Doppelstirnradstufe ausgebildet, bei der ein erstes Losrad 94 auf der Abtriebswelle 92 und ein zweites Losrad 96 auf der Hauptwelle 90 gehalten sind. Das erste Losrad 94 kann über die Schaltstelle 88₁ mit der Abtriebswelle 92 antriebsverbunden werden.

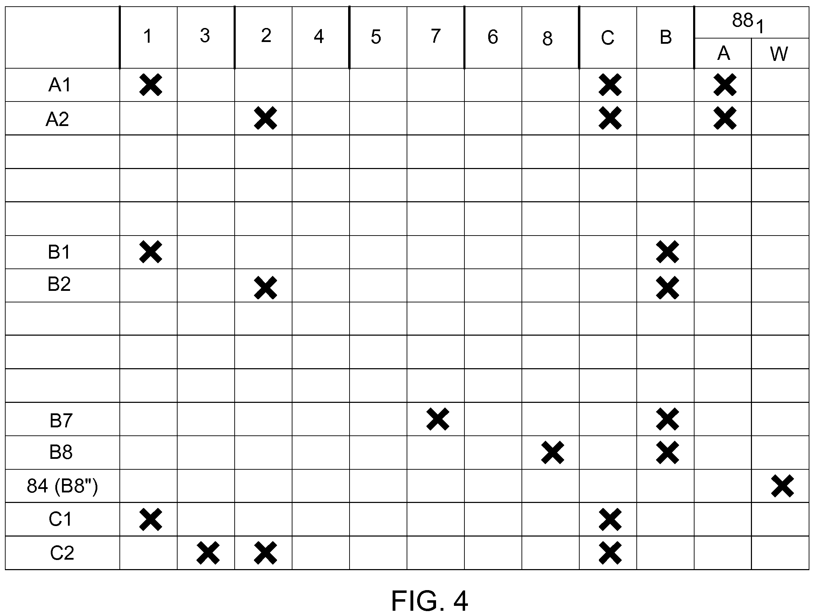

Die Figur 4 zeigt eine Schaltmatrix der über die Figuren 2 und 3 beschriebenen Ausführungsform der Getriebeanordnung 30. Die Schaltmatrix gibt lediglich die wichtigsten Schaltzustände wieder. In den Spalten der Schaltmatrix sind zunächst die 8 Gangstufen des Parallelschaltgetriebes 50 aufgeführt. Anschließend sind 3 Schaltgruppen C, B, A des Gruppenschaltgetriebes 80 aufgeführt. Schließlich ist in der letzten Spalte derjenige Schaltzustand der Doppelschaltstelle 88₁ aufgeführt, in dem die Doppelschaltstelle 88₁ die Vorgelegewelle 56₁ und die Abtriebswelle 92 antriebsmäßig miteinander verbindet. Wie der Schaltmatrix zu entnehmen ist, befindet sich die Doppelschaltstelle 88₁ zunächst in der Schaltstellung, in der die Schaltgruppe 82₁ beziehungsweise A antriebsmäßig mit der Abtriebswelle 91 verbunden ist. Während die Schaltgruppe 82₂ beziehungsweise B durchlaufen wird, befindet sich die Schaltstelle 88₁ in einer Neutralposition. Erst für den Übergang von der Schaltgruppe 82₂ beziehungsweise B in die Schaltgruppe 82_{c} beziehungsweise C wird als Überbrückung und um Lastschaltbarkeit herzustellen in die Übersetzung der Koppelübersetzungsstufe 84, hier mit B8' bezeichnet, geschaltet. Hierzu wird die Schaltstelle 88₁ in die Schaltstellung gebracht, in der das Losrad 96 der Stirnradstufe 85 mit der Abtriebswelle 92 antriebsverbunden ist.

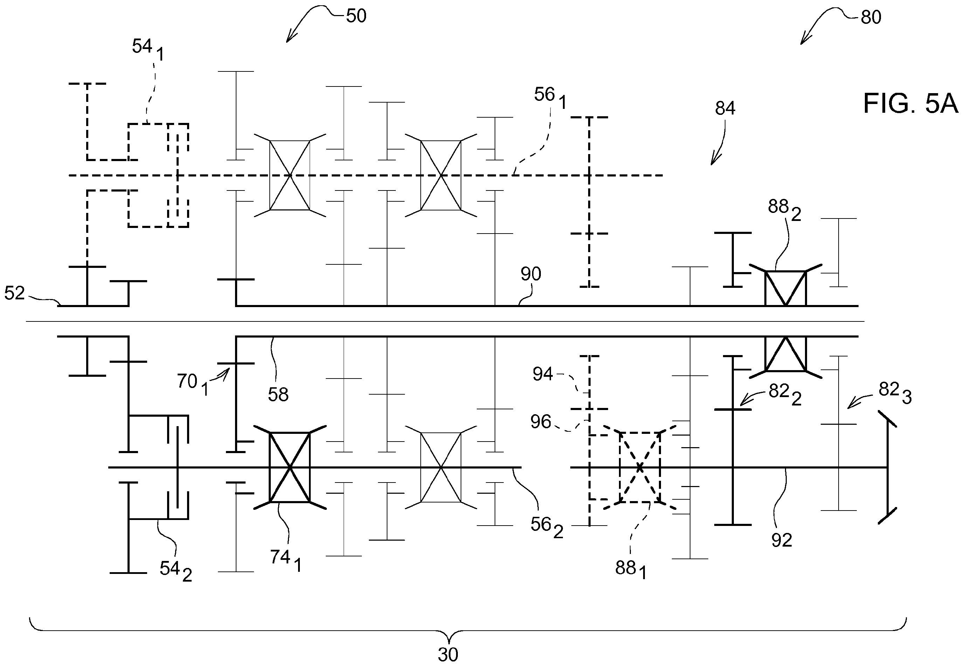

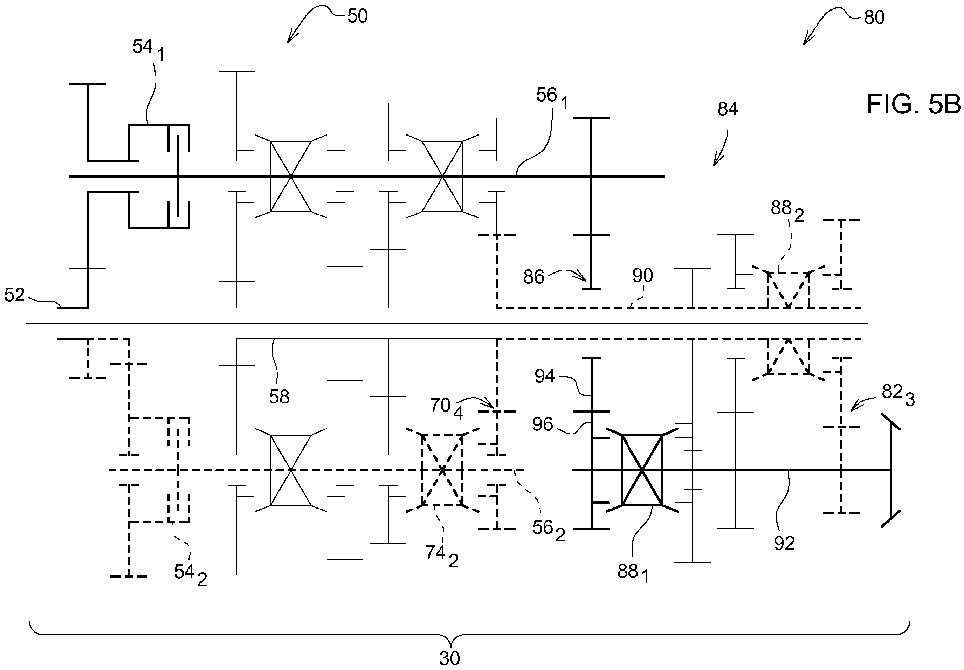

Anhand der Figuren 5a und 5a wird nachfolgend eine Sequenz von Lastschaltungen von der Übersetzung B7 in die Übersetzung B8' der Koppelübersetzungsstufe 84 und von dieser in die Übersetzung C1 beschrieben. Die in den Figuren 5a und 5b dargestellte Getriebeanordnung 30 entspricht der in der Figur 4 erläuterten, insofern nur die relevanten Bezugszeichen in den Figuren 5a und 5b eingezeichnet sind. Die zunächst eingestellte Übersetzung ist B7, deren Kraftfluss in der Figur 5a mit dick-durchgezogenem Strich dargestellt ist. Der Kraftfluss verläuft von der Eingangswelle 52 über das Schaltelement 54₂ auf die Vorgelegewelle 56₂. Über die entsprechend positionierte Schaltstelle 74₁ erfolgt ein Abtrieb über die Stirnradstufe 70₁, welche der Gangstufe 7 des Parallelschaltgetriebes 50 entspricht, auf die Ausgangswelle 58 und weiter in das Gruppenschaltgetriebe 80. Wiederum über die entsprechend positionierte Schaltstelle 88₂ erfolgt ein Kraftfluss über die Schaltgruppe 82₂ beziehungsweise B auf die Abtriebswelle 92. Weiterhin ist in der Figur 5a mit dick-gestricheltem Strich die vorselektierte beziehungsweise einzustellende Übersetzung B8' der Koppelübersetzungsstufe 84 dargestellt. Hierfür ist zunächst das Schaltelement 54₁ geöffnet. Über die Doppelstirnradstufe 86 der Koppelübersetzungsstufe 84 und die entsprechend positionierte Schaltstelle 88₁ steht die Vorgelegewelle 56₁ mit der Abtriebswelle 92 des Gruppenschaltgetriebes 80 in einer Antriebsverbindung, so dass eine antriebsmäßige Verbindung mit dem Gruppenschaltgetriebe 80 besteht. Der eben beschriebene Strang wird somit ausgehend von der Abtriebswelle 92 rückwärts bis zu dem getrennten Schaltelement 54₁ mitgeschleppt. Eine Lastschaltung zwischen der momentanen Übersetzung B7 und der einzustellenden Übersetzung B8' der Koppelübersetzungsstufe 84 erfolgt dadurch, dass die beiden Schaltelemente 54₁ und 54₂ zeitgleich und entgegengesetzt aktuiert werden und zwar indem das Schaltelement 54₂ geöffnet und das Schaltelement 54₁ geschlossen werden.

Die Figur 5b knüpft in ihrer Darstellung an die Figur 5a an, so das in der Figur 5b die zunächst eingestellte Übersetzung B8' mit dick-durchgezogenem Strich dargestellt ist. Der Kraftfluss verläuft von der Eingangswelle 52 über das Schaltelement 54₁ auf die Vorgelegewelle 56₁ und weiter über die Doppelstirnradstufe 86 der Koppelübersetzungsstufe 84 und die entsprechend positionierte Schaltstelle 88₁ auf die Abtriebswelle 92 des Gruppenschaltgetriebes 80. Weiterhin ist in der Figur 5b mit dick-gestricheltem Strich die vorselektierte beziehungsweise einzustellende Übersetzung C1 dargestellt. Hierfür ist das Schaltelement 54₂ geöffnet und über die entsprechend positionierte Schaltstelle 74₂ und die Stirnradstufe 70₄, welche der Gangstufe 1 des Parallelschaltgetriebes 50 entspricht, steht die Vorgelegewelle 56₂ mit der Ausgangswelle 58 in einer Antriebsverbindung, so dass eine antriebsmäßige Verbindung mit dem Gruppenschaltgetriebe 80 besteht. Dort besteht über die entsprechend positionierte Schaltstelle 88₂ eine Antriebsverbindung über die Schaltgruppe 82₃ beziehungsweise C auf die Abtriebswelle 92. Der eben beschriebene Strang wird somit ausgehend von der Abtriebswelle 92 rückwärts bis zu dem getrennten Schaltelement 54₂ mitgeschleppt. Eine Lastschaltung zwischen der momentanen Übersetzung B8' der Koppelübersetzungsstufe 84 und der einzustellenden Übersetzung C1 erfolgt dadurch, dass die beiden Schaltelemente 54₁ und 54₂ zeitgleich und entgegengesetzt aktuiert werden und zwar indem das Schaltelement 54₁ geöffnet und das Schaltelement 54₂ geschlossen werden.

Zusammenfassend kann zu der erfindungsgemäßen Getriebevorrichtung, die anhand des beschriebenen Ausführungsbeispiels erläutert wurde, gesagt werden, dass die Koppelübersetzungsstufe als Stütz- oder Ersatzgang dient, um eine Lastschaltbarkeit zwischen zwei Schaltgruppen des Gruppenschaltgetriebes zu gewährleistet. Dies wird dadurch erreicht, dass während der Kraftfluss ausgehend von der einen der Vorgelegewellen des Parallelschaltgetriebes über die Koppelübersetzungsstufe läuft, eine der Schaltgruppen des Gruppenschaltgetriebes vorselektiert und damit mit der anderen der Vorgelegewellen antriebsverbunden werden können und über eine gegenläufige Aktuierung der Schaltelemente des Parallelschaltgetriebes ein lastgeschalteter Übersetzungswechsel vollzogen werden kann.

### Bezugszeichenliste

- 10: Arbeitsfahrzeug
- 12: Kabine
- 14: vordere Fahrzeugachse
- 20: Antriebsstrang
- 22: Antriebsmotor
- 26: hintere Fahrzeugachse
- 30: Getriebeanordnung
- 40: Wendegetriebe
- 50: Parallelschaltgetriebe
- 52: Eingangswelle
- 54: Schaltelement
- 56: Vorgelegewelle
- 58: Ausgangswelle
- 60: Übersetzung
- 62: Übersetzung
- 64: Schaltebene
- 66: Stirnradstufe
- 68: Stirnradstufe
- 70: Stirnradstufe
- 72: Schaltstelle
- 74: Schaltstelle
- 80: Gruppenschaltgetriebe
- 82: Schaltgruppen
- 84: Koppelübersetzungsstufe
- 86: Stirnradstufe
- 88: Doppelschaltstelle
- 90: Hauptwelle
- 92: Abtriebswelle
- 94: Losrad
- 96: Losrad
- 100: Differentialgetriebe

## Patentansprüche

1. Getriebeanordnung (30), insbesondere für ein landwirtschaftliches Arbeitsfahrzeug (10), umfassend
ein Parallelschaltgetriebe (50) mit mehreren Gangstufen und einer Eingangswelle (52), von der ausgehend eine Antriebsleistung jeweils über ein erstes und ein zweites Schaltelement (541, 542) auf jeweilige Vorgelegewellen (561, 562) verteilt werden kann, und einer Ausgangswelle (58), wobei von jeder der Vorgelegewellen (561, 562) die Antriebsleistung bedarfsweise auf die Ausgangswelle (58) übertragbar ist,
ein Gruppenschaltgetriebe (80) mit mehreren Schaltgruppen (821, 822,...) und einer Abtriebswelle (92), wobei die Schaltgruppen (821, 822,...) mit der Ausgangswelle (581) des Parallelschaltgetriebes (50) antriebsverbindbar sind, um die Antriebsleistung auf die Abtriebswelle (92) des Gruppenschaltgetriebes (80) zu leiten, **gekennzeichnet durch** eine Koppelübersetzungsstufe (84), mit der die Antriebsleistung unter Umgehung der Schaltgruppen (821, 822,...) des Gruppenschaltgetriebes (80) von einer der Vorgelegewellen (561, 562) auf die Abtriebswelle (92) des Gruppenschaltgetriebes (80) leitbar ist.

2. Getriebeanordnung (30) nach Anspruch 1, **dadurch gekennzeichnet, dass** die Koppelübersetzungsstufe (84) als Stirnradstufe (86) ausgebildet ist.

3. Getriebeanordnung (30) nach Anspruch 2, **dadurch gekennzeichnet, dass** die Stirnradstufe (86) als Doppelstirnradstufe mit einem auf einer Hauptwelle (90) des Gruppenschaltgetriebes (80) drehbar gehaltenen Stirnrad ausgebildet ist.

4. Getriebeanordnung (30) nach einem der Ansprüche 1 bis 3, **dadurch gekennzeichnet, dass** eine Schaltstelle (881) mit einer ersten und einer zweiten Schaltstellung vorgesehen ist, wobei in der ersten Schaltstellung eine der Schaltgruppen (821, 822,...) mit der Abtriebswelle (92) und in der zweiten Schaltstellung die Koppelübersetzungsstufe (84) mit der Abtriebswelle (92) antriebsverbunden ist.

5. Getriebeanordnung (30) nach einem der Ansprüche 1 bis 4, **dadurch gekennzeichnet, dass** die Koppelübersetzungsstufe (84) mit der die geraden Gangstufen des Parallelschaltgetriebes (50) tragenden Vorgelegewelle (561) antriebsverbunden ist.

6. Getriebeanordnung (30) nach einem der Ansprüche 1 bis 5, **dadurch gekennzeichnet, dass** das Gruppenschaltgetriebe (80) eine ersten, eine zweite und eine dritte Schaltgruppe (821, 822, 823) umfasst, wobei eine Übersetzung der Koppelübersetzungsstufe (84) derjenigen Übersetzung entspricht, die durch eine Kombination der am längsten übersetzten Gangstufe des Parallelschaltgetriebes (30) und der zweiten Schaltgruppe (822) des Gruppenschaltgetriebes (80) schaltbar ist.

7. Getriebeanordnung (30) nach einem der Ansprüche 1 bis 6, **dadurch gekennzeichnet, dass** die Koppelübersetzungsstufe (84) in dem Gruppenschaltgetriebe (80) angeordnet ist.

## Claims

1. Gearbox assembly (30), in particular for an agricultural working vehicle (10) comprising
a parallel-shift gearbox (50) with a plurality of gear stages and an input shaft (52), starting from which drive power can be distributed respectively via a first and a second switching element (541, 542) to respective layshafts (561, 562), and an output shaft (58), wherein the drive power can be transmitted as necessary to the output shaft (58) from each of the layshafts (561, 562),
a group-shift gearbox (80) having a plurality of shifting groups (821, 822,...) and an output shaft (92), wherein the drive from the shifting groups (821, 822,...) can be connected to the output shaft (581) of the parallel-shift gearbox (50), in order to conduct the drive power to the output shaft (92) of the group-shift gearbox (80),
**characterized by**
a coupling transmission stage (84), with which the drive power can be conducted from one of the layshafts (561, 562) to the output shaft (92) of the group-shift gearbox (80) while bypassing the switching groups (821, 822,...) of the group-shift gearbox (80).

2. Gearbox assembly (30) according to Claim 1,
**characterized in that** the coupling transmission stage (84) is formed as a spur gear stage (86).

3. Gearbox assembly (30) according to Claim 2,
**characterized in that** the spur gear stage (86) is formed as a double spur gear stage with a spur gear rotatably held on a main shaft (90) of the group-shift gearbox (80).

4. Gearbox assembly (30) according to one of Claims 1 to 3, **characterized in that** a shifting point (881) having a first and a second shifting position is provided, wherein, in the first shifting position, the drive from one of the shifting groups (821, 822,...) is connected to the output shaft (92) and, in the second switching position, the drive from the coupling transmission stage (84) is connected to the output shaft (92).

5. Gearbox assembly (30) according to one of Claims 1 to 4, **characterized in that** the drive from the coupling transmission stage (84) is connected to the layshaft (561) carrying the even-numbered gears of the parallel-shift gearbox (50).

6. Gearbox assembly (30) according to one of Claims 1 to 5, **characterized in that** the group-shift gearbox (80) comprises a first, a second and a third shifting group (821, 822, 823), wherein a transmission of the coupling transmission stage (84) corresponds to that transmission which can be switched by a combination of the gear stage of the parallel-shift gearbox (30) that has the longest transmission and the second switching group (822) of the group-shift gearbox (80).

7. Gearbox assembly (30) according to one of Claims 1 to 6, **characterized in that** the coupling transmission stage (84) is arranged in the group-shift gearbox (80).

## Revendications

1. Ensemble de transmissions (30), destiné en particulier à un véhicule de travail agricole (10), l'ensemble comprenant
une transmission à commutation parallèle (50) munie de plusieurs étages de vitesses et d'un arbre d'entrée (52), à partir duquel une puissance d'entraînement peut être distribuée par le biais d'un premier et d'un deuxième élément de commutation (541, 542) entre des arbres intermédiaires respectifs (561, 562), et d'un arbre de sortie (58), chacun des arbres intermédiaires (561, 562) pouvant transmettre la puissance d'entraînement à l'arbre de sortie (58) selon les besoins,
une transmission à commutation de groupes (80) munie d'une pluralité de groupes de commutation (821, 822, ...) et d'un arbre de sortie (92), les groupes de commutation (821, 822, ...) pouvant être reliés en entraînement à l'arbre de sortie (581) de la transmission à commutation parallèle (50) afin de diriger la puissance d'entraînement sur l'arbre de sortie (92) de la transmission de groupe (80),
**caractérisé par**
un étage de démultiplication de couple (84) permettant de diriger la puissance d'entraînement de l'un des arbres intermédiaires (561, 562) sur l'arbre de sortie (92) de la transmission à commutation de groupes (80) par contournement des groupes de commutation (821, 822, ...) de la transmission à commutation de groupes (80).

2. Ensemble de transmissions (30) selon la revendication 1, **caractérisé en ce que** l'étage de démultiplication de couple (84) est conçu comme un étage à pignon droit (86).

3. Ensemble de transmissions (30) selon la revendication 2, **caractérisé en ce que** l'étage à pignon droit (86) est conçu comme un étage à deux pignons droits comprenant un pignon droit maintenu à rotation sur un arbre principal (90) de la transmission à commutation de groupes (80).

4. Ensemble de transmissions (30) selon l'une des revendications 1 à 3, **caractérisé en ce qu'**il est prévu un point de commutation (881) comprenant une première et une deuxième position de commutation, l'un des groupes de commutation (821, 822, ...) étant relié en entraînement, dans la première position de commutation, à l'arbre de sortie (92) et l'étage de démultiplication de couple (84) étant relié en entraînement, dans la deuxième position de commutation, à l'arbre de sortie (92).

5. Ensemble de transmissions (30) selon l'une des revendications 1 à 4, **caractérisé en ce que** l'étage de démultiplication de couple (84) est relié en entraînement à l'arbre intermédiaire (561) portant les étages de vitesses pairs de la transmission à commutation parallèle (50) .

6. Ensemble de transmissions (30) selon l'une des revendications 1 à 5, **caractérisé en ce que** la transmission à commutation de groupes (80) comprend un premier, un deuxième et un troisième groupe de commutation (821, 822, 823), une démultiplication de l'étage de démultiplication de couple (84) correspondant à la démultiplication qui peut être commutée par une combinaison de l'étage de vitesses le plus démultiplié de la transmission à commutation parallèle (30) et du deuxième groupe de commutation (822) de la transmission à commutation de groupes (80).

7. Ensemble de transmissions (30) selon l'une des revendications 1 à 6, **caractérisé en ce que** l'étage de démultiplication de couple (84) est disposé dans la transmission à commutation de groupes (80).
